# EUROPÄISCHE PATENTSCHRIFT

(11) **EP 2 246 183 B1**
(45) Veröffentlichungstag und Bekanntmachung des Hinweises auf die Patenterteilung: **17.08.2011**
(21) Anmeldenummer: 09158787.3
(22) Anmeldetag: 27.04.2009
(51) Int. Cl.: B32B 5/18, B32B 27/12, B60N 2/58, B61D 33/00, B29C 44/00, B32B 3/30, B68G 11/04, A47C 27/00

(54) **Verfahren zum Herstellen einer luftdurchlässigen Verbundstoffbahn aus einer strukturierten Schaumkunststoffbahn, sowie deren Verwendung**
Method for producing an air-permeable composite sheet which is made of a structured sheet of expanded material and use thereof
Procédé de fabrication d'une couche composite laissant passer l'air à partir d'une couche en mousse structuré, et son utilisation

(43) Veröffentlichungstag der Anmeldung: 03.11.2010
(73) Patentinhaber: Mattes & Ammann GmbH & Co. KG, 72436 Messstetten (Tieringen) (DE)
(72) Erfinder: Larsén, Christoph, 72469 Meßstetten Tieringen (DE)
(74) Vertreter: Raffay & Fleck

(56) Entgegenhaltungen:
- EP-A1- 1 859 929
- DE-A1- 3 617 816
- DE-U1- 8 701 280
- GB-A- 2 267 867
- US-A1- 2002 155 255

## Beschreibung

Die Erfindung betrifft ein Verfahren zum Herstellen einer luftdurchlässigen Verbundstoffbahn aus einer Schaumkunststoffbahn aus Polyester und/oder Polyether nach dem Oberbegriff des Hauptanspruchs. Ein derartiges Verfahren ist aus der GB 2 267 867 A und der EP 1 859 929 A1 bekannt, bei der Schaumkunststoffbahnen sandwichartig mit Maschenwarebahnen aus Polyester und/oder Polyamid sandwichartig flammkaschiert sind. Die Verbundstoffbahn der EP 1 859 929 A1 ist auch luftdurchlässig.

Doch ist die Luftdurchlässigkeit durch die Dicke der Schaumkunststoffbahn beschränkt. Die Herstellung von dünnen Verbundstoffbahnen mit einer Dicke im Bereich der in der EP 1 859 929 angegebenen Untergrenzen ist mit vergleichsweise hohem Produktionsaufwand verbunden. Darüber hinaus sind solche Verbundstoffbahnen dann, wenn sie mit Strukturen versehen oder an Strukturen angepasst werden sollen, aufwendig zu behandeln. Dies geschieht meistens durch Einbringen von Nähten. Sollen beispielsweise solche Verbundstoffbahnen für Kfz-Sitze eingesetzt werden, so müssen diese Verbundstoffbahnen an die Form des Sitzes angepasst werden und an diesem so befestigt werden, dass die Form wie gewünscht erhalten bleibt.

Darüber hinaus weisen Verbundstoffbahnen mit einer konstanten Dicke den Nachteil auf, dass sie entweder eine relativ schlechte Luftdurchlässigkeit besitzen (bei vergleichsweise großer Dicke) oder vergleichsweise wenig Komfort (bei geringer Dicke) bieten.

Daher ist es Aufgabe der vorliegenden Erfindung, ein Verfahren anzugeben, mit dem kostengünstig die Herstellung von Verbundstoffbahnen möglich ist, die leicht an vorgegebene Formen angepasst werden können, in die einfach Muster eingebracht werden können und die bei sehr guter Luftdurchlässigkeit hohen Komfort bieten.

Gelöst wird die Aufgabe durch ein Verfahren gemäß Anspruch 1. Die abhängigen Ansprüche 2 bis 14 geben vorteilhafte Weiterbildungen an.

Erfindungsgemäß weist das eingangs genannte Herstellungsverfahren folgende Kennzeichnungsmerkmale auf:
die bereitgestellte Schaumkunststoffbahn mehrere Stellen und/oder Bereiche mit einer ersten Dicke (2a) zwischen 1 mm und 10 mm und mehrere Stellen und/oder Bereiche mit einer zweiten Dicke (3a) aufweist, wobei die zweite Dicke (3a) größer ist als die erste Dicke (2a) und somit strukturiert ist,
das Zusammenpressen der Schaumkunststoffbahn durchgeführt wird bevor die Schaumkunststoffbahn angeschmolzen oder mit Klebesubstanz versehen wird und bevor die Maschenwarebahn aufgebracht wird, und
das großflächiges Anschmelzen der Schaumkunststoffbahn oder das Aufbringen einer Klebesubstanz in zumindest nicht vollständig relaxiertem Zustand der Schaumkunststoffbahn erfolgt.

Bei einem solchen Verfahren wird also eine strukturierte Schaumkunststoffbahn eingesetzt. Das Strukturieren von Schaumkunststoffbahnen ist produktionstechnisch vergleichsweise einfach möglich. Dabei können verschiedenartige Formen, Strukturen und Muster realisiert werden. Durch eine solche Strukturierung wird eine spätere Anpassung oder Bemusterung der Verbundstoffbahn durch Einbringen von Nähten überflüssig. Darüber hinaus weist die strukturierte Schaumkunststoffbahn Bereiche mit einer ersten, geringen Dicke und einer zweiten, größeren Dicke auf. Dadurch ist die Luftdurchlässigkeit der entstehenden Verbundstoffbahn sehr hoch. Auf der anderen Seite weist die strukturierte Schaumkunststoffbahn aufgrund der Bereiche mit der zweiten Dicke auch einen hohen Sitz-, Liege-, Berührungs- und/oder Tragekomfort auf.

Durch das Zusammenpressen der Schaumkunststoffbahn vor dem Anschmelzen bzw. Aufbringen der Klebesubstanz wird der Schritt des Anschmelzens bzw. des Aufbringens der Klebesubstanz deutlich erleichtert. Insbesondere lassen sich dadurch ein gleichmäßiges Anschmelzen bzw. ein gleichmäßiges Auftragen der Klebesubstanz einfach realisieren. Dabei ist es nicht notwendig, dass die Schaumkunststoffbahn während des Anschmelzen oder Aufbringen der Klebesubstanz zusammengedrückt wird. Durch die Trägheit der Entspannung der Schaumkunststoffbahn besteht die Möglichkeit, das Anschmelzen oder Aufbringen der Klebesubstanz auch im nach dem Zusammendrücken durchzuführen, während die Schaumkunststoffbahn zu ihrer ursprünglichen Dicke und Form zurückkehrt, diese jedoch noch nicht vollständig erreicht hat, also noch nicht vollständig relaxiert ist. Bei dieser Betrachtung der Relaxierung der Schaumkunststoffbahn kommt es nicht auf die gesamte, gegebenenfalls sehr große oder lange Schaumkunststoffbahn an, sondern auf die Bereiche der Schaumkunststoffbahn, die zum jeweiligen Zeitpunkt angeschmolzen oder mit Klebsubstanz versehen werden.

Dieses Verfahren bietet somit die Möglichkeit, auf einfache Weise eine luftdurchlässige und strukturierte Verbundstoffbahn zu erzeugen, die eine hohe Luftdurchlässigkeit und einen hohen Komfort aufweist und ein späteres Anpassen überflüssig macht.

Dadurch lassen sich zahlreiche Vorteile kombinieren und insbesondere Produktionsaufwand einsparen.

Je nach Einsatzzweck kann die Schaumkunststoffbahn dabei beidseitig oder nur von einer Seite mit Maschenwarebahn(en) kaschiert werden. Dabei kommen die Vorteile des erfindungsgemäßen Verfahrens insbesondere dann zum Tragen, wenn die Kaschierung zumindest auf einer strukturierten Seite der Schaumkunststoffbahn erfolgt.

Besonders vorteilhaft ist es, wenn gemäß Anspruch 2 die Dicke der Schaumkunststoffbahn zumindest an den Bereichen und/oder Stellen, die die erste Dicke aufweisen, durch das Anschmelzen reduziert wird. Durch eine solche weitere Reduktion der Dicke, insbesondere an den dünnen Stellen, erhöht die Luftdurchlässigkeit auf einfache Weise weiter. Somit können durch dieses Verfahren auf besonders einfache Weise sehr hohe Luftdurchlässigkeiten der Verbundstoffbahn erzielt werden.

Vorteilhafter Weise wird die Schaumkunststoffbahn gemäß Anspruch 3 durch das Anschmelzen auf eine erste Dicke im Bereich von 0,5 bis 4 mm reduziert. Auf diese Weise lassen sich extrem hohe Luftdurchlässigkeiten mit einem vergleichsweise einfach durchzuführen Verfahren erzielen.

Vorteilhafter Weise weist die Schaumkunststoffbahn gemäß Anspruch 4 ein Raumgewicht von mehr als 20 kg/m³, insbesondere von 40 bis 50 kg/m³, insbesondere 45 kg/m³, auf, wobei die Stauchhärte insbesondere 4,5 bis 7,5 kPa beträgt. Durch die Wahl eines einer solchen Schaumkunststoffbahn wird bei hoher Luftdurchlässigkeit ein besonderer Komfort erzielt. Darüber hinaus weist eine Verbundstoffbahn aus einer solchen Schaumkunststoffbahn besonders vorteilhafte Eigenschaften bezüglich der Anpassung an vorgegebene Formen bzw. der Einprägung von Mustern auf. So ist eine solche Verbundstoffbahn vergleichsweise formstabil und sind eingebrachte Muster auch nach Belastung noch erkennbar.

Bevorzugt wird gemäß Anspruch 5 als Maschenwarebahn(en) Rundstrickware und/oder Kettenwirkware verwendet. Solche Ware eignet sich aufgrund ihrer Eigenschaft besonders gut zur Aufbringung auf strukturierte Schaumkunststoffbahnen. Auch vergleichsweise kleine Muster können problemlos kaschiert werden.

Vorteilhafter Weise wird gemäß Anspruch 6 mindestens eine dehnbare Maschenwarebahn, mit einer Dehnungsfähigkeit von mindestens 10% bei einer Kraft von 100 N in Längs- und/oder Querrichtung verwendet. Durch die Verwendung einer dehnbare Maschenware können auch stärkere Strukturierungen und Musterungen sehr gut kaschiert werden. Insbesondere kann dadurch eine zu große von der Maschenware auf den Schaumkunststoff wirkende Kraft vermieden werden, die zu einer ungewollten Deformation der Schaumkunststoffbahn führen kann. Daraus ist ersichtlich, dass die Dehnungsfähigkeit der Maschenwarebahn durch den Fachmann an die Struktur der Schaumkunststoffbahn angepasst werden kann. In der Regel eignen sich jedoch Maschenwarebahnen mit einer Dehnungsfähigkeit von mindestens 10% bei einer Kraft von 100 N. Die Dehnungsfähigkeit kann dabei sowohl in Längs- als auch in Querrichtung oder in beide Richtungen gegeben sein. Auch können bezüglich der einzelnen Richtungen unterschiedliche Dehnbarkeiten vorliegen. Diesbezüglich bietet sich ebenfalls eine Anpassung an die Strukturierung der Schaumkunststoffbahn an.

Besonders vorteilhaft ist es, wenn gemäß Anspruch 8 das Aufbringen mindestens einer Maschenwarebahn zumindest auf die angeschmolzenen oder mit Klebemitteln versehenen Bereiche unter Zusammendrücken der Schaumkunststoffbahn erfolgt. Dabei kann das Zusammendrücken unterschiedlich stark gewählt werden. Durch das Zusammendrücken wird die Struktur der Schaumkunststoffbahn zumindest teilweise nivelliert, so dass das Aufbringen der Maschenwarebahn erleichtert wird. Dabei sollte jedoch darauf geachtet werden, dass die Schaumkunststoffbahn auch nach der Aufbringung der Maschenwarebahn(en) noch die gewünschte Form annehmen kann. Dies kann beispielsweise durch Wahl entsprechend dehnbarer Maschenware realisiert werden.

Vorteilhafter Weise wird gemäß Anspruch 9 mindestens eine dehnbare Maschenwarebahn verwendet, bei der die Dehnbarkeit so bemessen ist, dass nach der Kaschierung unter Zusammendrücken zumindest eine beinahe vollständige Relaxierung der Schaumkunststoffbahn möglich ist. Zwar wird es nur in seltenen Fällen gelingen, eine absolut vollständige Relaxierung zu erreichen, doch sind geringe Spannungen im Verbundstoff nicht schädlich und können marginale Abweichungen von der ursprünglichen Form der Schaumkunststoffbahn entweder bei der Produktion der Schaumkunststoffbahn berücksichtigt werden oder ohne Einbußen hingenommen werden.

Je nach Anwendungsfall kann es vorteilhaft sein, die Schaumkunststoffbahn gemäß Anspruch 10 vor dem Anschmelzen und/oder dem Aufbringen der Klebesubstanz und/oder der Maschenwarebahn(en) so durchgeführt wird, dass die Schaumkunststoffbahn im zusammengedrückten Zustand eine einheitliche Dicke aufweist. Auch wenn nach dem Zusammendrücken und unmittelbar vor dem Anschmelzen und/oder dem Aufbringen der klebesubstanz und/oder der Maschenwarebahn(en) eine (teilweise) Relaxierung ermöglichst wird, so ist die Schaumkunststoffbahn in der Regel so träge, dass auch unmittelbar nach dem Zusammendrücken noch eine Oberfläche anzutreffen ist, die vergleichsweise eben ist und so ein besonders leichtes Anschmelzen und/oder Aufbringen ermöglicht.

Von besonderem Vorteil ist es jedoch, wenn gemäß Anspruch 1 das Anschmelzen der Schaumkunststoffbahn bzw. das Aufbringen der Klebersubstanz und/oder der Maschenwarebahn erfolgt, während die Schaumkunststoffbahn eine im Wesentlichen einheitliche Dicke aufweist, die insbesondere im Wesentlichen der ersten Dicke entspricht. Erfolgt der Vorgang des Anschmelzens bzw. des Aufbringens während der Schaumkunststoffbahn eine einheitliche Dicke aufweist ist der Vorgang besonders leicht durchzuführen. Dies wird noch gesteigert, wenn eine ebene Oberfläche vorliegt. Dabei bietet es sich insbesondere an, die Schaumkunststoffbahn auf die erste Dicke zusammenzupressen. Es kann jedoch auch angeraten sein, um Unebenheiten auszugleichen ein etwas stärkeres Zusammendrücken zu wählen.

Je nach Anwendungsfall kann es vorteilhaft sein, wenn die Schaumkunststoffbahn nur von einer Seite strukturiert ist. Dies bietet sich insbesondere dann an, wenn die Auflage auf eine ebene Fläche beabsichtigt ist.

Besonders vorteilhaft ist es, wenn die Schaumkunststoffbahn gemäß Anspruch 1 3 eine erste Dicke im Bereich von 1 mm bis 3 mm, insbesondere von 2 mm, und eine zweite Dicke von 3 bis 6 mm, insbesondere von 5 mm aufweist und dabei insbesondere nur von einer Seite strukturiert ist. Bei der Wahl dieser Dicken kann bei hohem Komfort eine besonders gute Luftdurchlässigkeit erreicht werden.

Je nach Anwendungsfall kann es besonders vorteilhaft sein, wenn die Schaumkunststoffbahn gemäß Anspruch 14 eine zweite Dicke von 5 mm oder mehr aufweist. Durch eine solch hohe Dicke in manchen Bereichen kann ein besonders großer Komfort erzielt werden.

Besonders geeignet ist eine Verbundstoffbahn gemäß der Ansprüche 1 bis 14 insbesondere für die Verwendung für Möbel, Matratzen, Tür- oder Wandverkleidungen, Innenraumverkleidungen von Land- oder Luftfahrzeugen bzw. Stoff für Bekleidungsstücke, Schuhe oder Stiefel. In all diesen Bereichen ist eine hohe Luftdurchlässigkeit und eine Formanpassung sowie eine Strukturierung sowie hoher Komfort wünschenswert. Dies gilt genauso für Sitzauflagen von Land- und Luftfahrzeugen, insbesondere von Automobilen. Wird die Verbundstoffbahn bei einem solchen Einsatz durch den menschlichen Körper belastet, wie dies beispielsweise bei manchen Möbeln, Sitzauflagen, Schuhen und Stiefeln der Fall ist, sorgen die Bereiche mit der zweiten Dicke für ein angenehmes Einsinken und eine bedarfsgerechte Polsterung, wohingegen die Bereiche mit erster Dicke die wünschenswerte Luftdurchlässigkeit sicherstellen. Bei Innenraumverkleidungen, Tür- oder Wandverkleidungen und anderen Möbeln stehen der Komfort bei Berührung, Auflegen von Körperteilen, die Optik und die Luftdurchlässigkeit im Vordergrund. All dies kann durch eine erfindungsgemäß hergestellte Verbundstoffbahn erzielt werden.

Weitere Vorteile und Ausführungsmöglichkeiten sollen im Folgenden anhand der schematischen und nicht beschränkenden, skizzenhaften Figuren dargestellt werden. Weitere Abwandlungen und Anpassungen sind durch den Fachmann möglich.

Die Figuren zeigen im Einzelnen:
- Fig. 1: einen Querschnitt durch eine strukturierte Schaumkunststoffbahn vor der Kaschierung; und
- Fig. 2: einen Querschnitt durch eine strukturierte Schaumkunststoffbahn nach beidseitiger Flammkaschierung.

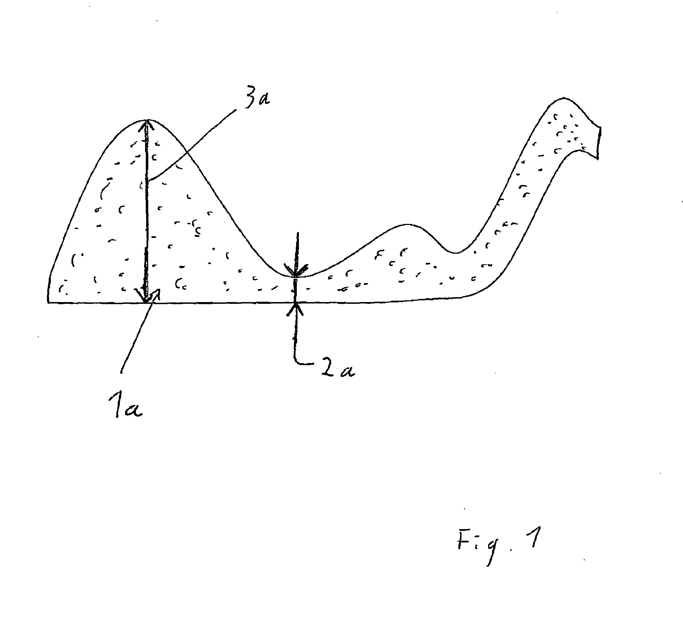

Fig. 1 zeigt einen Querschnitt durch eine strukturierte Schaumkunststoffbahn 1 a. Diese Schaumkunststoffbahn 1 a ist im linken Bereich nur auf der Oberseite strukturiert und weist dort eine ebene Unterseite auf. Im rechten Bereich ist die Schaumkunststoffbahn auch von der Unterseite her strukturiert. Die Schaumkunststoffbahn 1 a weist einen Bereich mit maximaler Dicke 3a und einen Bereich mit minimaler Dicke 2a auf.

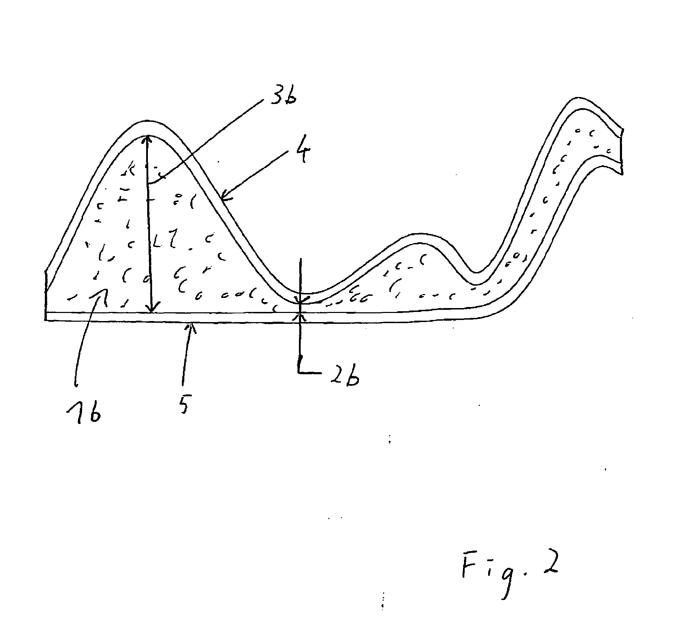

Fig. 2 zeigt eine erfindungsgemäß hergestellte Verbundstoffbahn. Zu erkennen ist eine Schaumkunststoffbahn nach Flammkaschierung 1 b, die aus der Schaumkunststoffbahn vor Kaschierung 1 a aus Fig. 1 durch die Flammkaschierung hervorgegangen ist. Durch die Flammkaschierung wurden die obere Maschenwarebahn 4 und die untere Maschenwarebahn 5 auf die Schaumkunststoffbahn aufgebracht. Zu erkennen ist, dass die minimale Dicke der Schaumkunststoffbahn vor der Kaschierung 2a als auch die maximale Dicke der Schaumkunststoffbahn vor der Kaschierung 3a durch die Flammkaschierung reduziert wurden. Dadurch ist nun eine nochmals reduzierte minimale Dicke der Schaumkunststoffbahn nach Flammkaschierung 2b entstanden. Ebenso wurde die maximale Dicke der Schaumkunststoffbahn nach Flammkaschierung 3b im Vergleich zu der maximalen Dicke der Schaumkunststoffbahn vor der Kaschierung 3a reduziert.

Die gezeigte Verbundstoffbahn ist geeignet zur Auflage auf eine Fläche, die zunächst eben verläuft und dann nach rechts hin eine Erhebung aufweist. Somit kann die untere Maschenwarebahn 5 auf die Auflage formschlüssig aufgelegt werden. Durch die strukturierte Oberseite können Muster oder Beschriftungen dargestellt werden.

### Bezugszeichenliste:

- 1 a: Schaumkunststoffbahn vor Kaschierung
- 1 b: Schaumkunststoffbahn nach Flammkaschierung
- 2a: minimale Dicke der Schaumkunststoffbahn vor Kaschierung
- 2b: minimale Dicke der Schaumkunststoffbahn nach Flammkaschierung
- 3a: maximale Dicke der Schaumkunststoffbahn vor Kaschierung
- 3b: maximale Dicke der Schaumkunststoffbahn nach Flammkaschierung
- 4: obere Maschenwarebahn
- 5: untere Maschewahrebahn

## Patentansprüche

1. Verfahren zum Herstellen einer luftdurchlässigen Verbundstoffbahn aus einer Schaumkunststoffbahn (1 a) aus Polyester und/oder Polyether, die mit Maschenwarebahnen (4, 5) aus Polyester und/oder Polyamid oder natürlichem Material sandwichartig ein- oder doppelseitig flamm- oder klebekaschiert wird, wobei folgende Schritte durchgeführt werden:
- Bereitstellen der Schaumkunststoffbahn (1a),
- Zusammenpressen der Schaumkunststoffbahn,
- vollflächiges oder großflächiges Anschmelzen der Schaumkunststoffbahn oder Aufbringen einer Klebesubstanz,
- Aufbringen der Maschenwarebahn(en) zumindest auf die angeschmolzenen beziehungsweise mit Klebesubstanz versehenen Bereiche,
**dadurch gekennzeichnet, dass**
die bereitgestellte Schaumkunststoffbahn mehrere Stellen und/oder Bereiche mit einer ersten Dicke (2a) zwischen 1 mm und 10 mm und mehrere Stellen und/oder Bereiche mit einer zweiten Dicke (3a) aufweist, wobei die zweite Dicke (3a) größer ist als die erste Dicke (2a) und somit strukturiert ist,
das Zusammenpressen der Schaumkunststoffbahn durchgeführt wird bevor die Schaumkunststoffbahn angeschmolzen oder mit Klebesubstanz versehen wird und bevor die Maschenwarebahn aufgebracht wird, und
das großflächiges Anschmelzen der Schaumkunststoffbahn oder das Aufbringen einer Klebesubstanz in zumindest nicht vollständig relaxiertem Zustand der Schaumkunststoffbahn erfolgt.

2. Verfahren nach Anspruch 1, **dadurch gekennzeichnet, dass** die Dicke der Schaumkunststoffbahn (1 a) zumindest an den Bereichen und/oder Stellen, die die erste Dicke (2a) aufweisen, durch das Anschmelzen reduziert wird.

3. Verfahren nach Anspruch 2, **dadurch gekennzeichnet, dass** die Schaumkunststoffbahn (1 a) zumindest an den Bereichen und/oder Stellen, die die erste Dicke (2a) aufweisen durch das Anschmelzen auf eine erste Dicke (2b) im Bereich von 0,5 bis 4 mm reduziert wird.

4. Verfahren nach einem der vorstehenden Ansprüche, **gekennzeichnet durch** ein Raumgewicht der Schaumkunststoffbahn (1 a) von mehr als 20 kg/m³, insbesondere von 40 bis 50 kg/m³, insbesondere 45 kg/m³ bei einer Stauchhärte von 4,5 - 7,5 kPa.

5. Verfahren nach einem der vorstehenden Ansprüche, **dadurch gekennzeichnet, dass** als Maschenwarebahn(en) (4, 5) Rundstrickware und/oder Kettenwirkware verwendet wird.

6. Verfahren nach einem der vorstehenden Ansprüche, **dadurch gekennzeichnet, dass** mindestens eine dehnbare Maschenwarebahn (4, 5), mit einer Dehnungsfähigkeit von mindestens 10% bei einer Kraft von 100 N in Längsund/oder Querrichtung, verwendet wird.

7. Verfahren nach einem der vorstehenden Ansprüche, **dadurch gekennzeichnet, dass** die Strukturierung der Schaumkunststoffbahn (1a) ein Muster beinhaltet, insbesondere ein in Längs- und/oder Querrichtung verlaufendes Wellenmuster.

8. Verfahren nach einem der vorstehenden Ansprüche, **dadurch gekennzeichnet, dass** das Aufbringen mindestens einer Maschenwarebahn (4, 5) zumindest auf die angeschmolzenen oder mit Klebemitteln versehehenen Bereiche unter Zusammendrücken der Schaumkunststoffbahn erfolgt.

9. Verfahren nach Anspruch 8, **dadurch gekennzeichnet, dass** mindestens eine dehnbare Maschenwarebahn (4, 5) verwendet wird und die Dehnbarkeit so bemessen ist, dass nach der Kaschierung eine zumindest beinahe vollständige Relaxierung der Schaumkunststoffbahn möglich ist.

10. Verfahren nach einem der vorstehenden Ansprüche, **dadurch gekennzeichnet, dass** das Zusammendrücken der Schaumkunststoffbahn (1 a) vor dem Anschmelzen und/oder dem Aufbringen der Klebesubstanz und/oder der Maschenwarebahn(en) (4, 5) so durchgeführt wird, dass die Schaumkunststoffbahn (1 a, 1 b) im zusammengedrückten Zustand eine einheitliche Dicke aufweist.

11. Verfahren nach einem der vorstehenden Ansprüche, **dadurch gekennzeichnet, dass** das Anschmelzen der Schaumkunststoffbahn (1 a) beziehungsweise das Aufbringen der Klebesubstanz und/oder der Maschewarebahn(en) (4, 5) erfolgt, während die Schaumkunststoffbahn (1 a, 1 b) eine im Wesentlichen einheitliche Dicke aufweist, die insbesondere im Wesentlichen der ersten Dicke (2a) entspricht.

12. Verfahren nach einem der vorstehenden Ansprüche, **dadurch gekennzeichnet, dass** die Schaumkunststoffbahn (1a) nur von einer Seite strukturiert ist.

13. Verfahren nach einem der vorstehenden Ansprüche, **dadurch gekennzeichnet, dass** die Schaumkunststoffbahn (1a) eine erste Dicke (2a) im Bereich von 1 mm bis 3 mm, insbesondere von 2 mm, und eine zweite Dicke (2b) von 3 bis 6 mm, insbesondere 5 mm, aufweist und dabei insbesondere nur von einer Seite strukturiert ist.

14. Verfahren nach einem der Ansprüche 1 bis 12, **dadurch gekennzeichnet, dass** die Schaumkunststoffbahn (1 a) eine zweite Dicke (3a) von 5 mm oder mehr aufweist.

## Claims

1. A method for manufacturing an air-permeable composite sheet from a foam plastic sheet (1a) made of polyester and/or polyether, which are flamelaminated or adhesive-laminated on a single side or on both sides, in a sandwich-like manner, with knitted fabric sheets (4, 5) made of polyester and/or polyamide or natural material, whereas the following steps are performed:
Preparation of the foam plastic sheet (1a),
Compression of the foam plastic sheet,
Melting of the foam plastic sheet over its whole surface or practically over its whole surface or application of an adhesive substance,
Application of the knitted fabric sheet(s) at least on the molten areas respectively areas coated with adhesive substance,
**characterised in that**
the prepared foam plastic sheet has several locations and/or areas with a first thickness (2a) between 1 mm and 10 mm and several locations and/or areas with a second thickness (3a), whereas the second thickness (3a) is larger than the first thickness (2a) and is structured therewith,
the compression of the foam plastic sheet is carried out, before the foam plastic sheet is molten or is coated with adhesive substance and before the knitted fabric sheet is applied, and
the melting of the foam plastic sheet practically over its whole surface or the application of a adhesive substance takes place in at least non complete relaxed state of the foam plastic sheet.

2. The process according to Claim 1, **characterised in that** the thickness of the foam plastic sheet (1a) is reduced by melting at least at the areas and/or locations exhibiting the first thickness (2a).

3. The process according to Claim 2, **characterised in that** the thickness of the foam plastic sheet (1a) is reduced to a first thickness (2b) in the range of 0.5 to 4 mm, by melting at least at the areas and/or locations exhibiting the first thickness (2a).

4. A method according to one of the previous claims, **characterised by** a density of the foam plastic sheet (1a) of more than 20 kg/m³, in particular of 40 to 50 kg/m³, in particular 45 kg/m³ with a compression hardness of 4.5 - 7.5 kPa.

5. A method according to one of the previous claims, **characterised in that** circular knitted fabric and/or warp knitted fabric is used a knitted fabric sheet(s) (4, 5).

6. A method according to one of the previous claims, **characterised in that** at least one stretchable knitted fabric sheet (4, 5) is used with a stretchability of at least 10% with a force of 100 N in longitudinal and/or transversal direction.

7. A method according to one of the previous claims, **characterised in that** the structuring of the foam plastic sheet (1a) contains a pattern, in particular a wave pattern running in longitudinal and/or transversal direction.

8. A method according to one of the previous claims, **characterised in that** the application of at least one knitted fabric sheet (4, 5) at least on the molten areas or the areas coated with adhesive substances includes compressing the foam plastic sheet.

9. A method according to claim 8, **characterised in that** at least one stretchable knitted fabric sheet (4, 5) is used and the stretchability is sized in such a way, that at least almost complete relaxing of the foam plastic sheet is possible after lamination.

10. A method according to one of the previous claims, **characterised in that** the compression of the foam plastic sheet (1a) takes place before melting and/or application of the adhesive substance and/or of the knitted fabric sheet(s) (4, 5), that the foam plastic sheet (1 a, 1 b) has a uniform thickness in the compressed state.

11. A method according to one of the previous claims, **characterised in that** the melting of the foam plastic sheet (1a) respectively the application of the adhesive substance and/or of the knitted fabric sheet(s) (4, 5) takes place while the foam plastic sheet (1a, 1b) has a substantially uniform thickness, which in particular substantially corresponds to the first thickness (2a).

12. A method according to one of the previous claims, **characterised in that** the foam plastic sheet (1a) is only structured from one side.

13. A method according to one of the previous claims, **characterised in that** the foam plastic sheet (1a) has a first thickness (2a) in the range of 1 mm to 3 mm, in particular of 2 mm and a second thickness (2b) of 3 to 6 mm, in particular 5 mm, and consequently is in particular structured only from one side.

14. A method according to one of the claims 1 to 12, **characterised in that** the foam plastic sheet (1a) has a second thickness (3a) of 5 mm.

## Revendications

1. Procédé de fabrication d'une bande de matériau composite perméable à l'air consitutée d'une bande de mousse synthétique (1a) en polyester et/ou polyéther, laminée à la colle ou à la flamme à l'aide de bandes tricotées (4, 5) en polyester et/ou en polyamide ou matériau naturel disposées en sandwich sur une ou deux faces, l'invention comportant les phases suivantes :
Préparation de la bande de mousse synthétique (1a),
Compression de la bande de mousse synthétique,
Fusion de la bande de mousse synthétique sur toute la surface ou sur une grande partie de la surface ou bien application d'une substance adhésive,
Application de la ou des bandes tricotées au moins sur les zones fondues ou revêtues de substance adhésive,
**caractérisé en ce que**
la bande de mousse synthétique préparée présente plusieurs points et/ou zones d'une première épaisseur (2a) entre 1 mm et 10 mm et plusieurs points et/ou zones d'une seconde épaisseur (3a), où la seconde épaisseur (3a) est supérieure à la première épaisseur (2a) et ainsi structurée,
la compression de la bande de mousse synthétique se produit avant la fusion de la bande de mousse synthétique ou la pose de la substance adhésive et avant l'application de la bande tricotée et
la fusion sur une grande partie de la surface de la bande de mousse synthétique ou l'application d'une substance adhésive se produit dans un état au moins pas complètement relâché de la bande de mousse synthétique.

2. Procédé selon la revendication 1, **caractérisé en ce que** l'épaisseur de la bande de mousse synthétique (1a) est réduite par fusion au moins au niveau des zones et/ou des points présentant la première épaisseur (2a).

3. Procédé selon la revendication 2, **caractérisé en ce que** la bande de mousse synthétique (1a) est réduite par fusion et ainsi ramenée à une première épaiseur (2b) dans la fourchette de 0,5 à 4 mm, au moins au niveau des zones et/ou des points présentant la première épaisseur (2a).

4. Procédé selon l'une des revendications précédentes, **caractérisé par** un poids volumétrique de la bande de mousse synthétique (1a) de plus de 20 kg/m³, en particulier de 40 à 50 kg/m³, en particulier 45 kg/m³ pour une résistance à la compression de 4,5 - 7,5 kPa.

5. Procédé selon l'une des revendications précédentes, **caractérisé en ce que** l'on utilise du tricot de métier circulaire et/ou tricot de métier chaîne comme bandes tricotées (4, 5).

6. Procédé selon l'une des revendications précédentes, **caractérisé en ce que** l'on utilise au moins une bande tricotée extensible (4, 5), avec une capacité d'allongement d'au moins 10% à une force de 100 N dans la direction longitudinale et/ou transversale.

7. Procédé selon l'une des revendications précédentes, **caractérisé en ce que** la structuration de la bande de mousse synthétique (1a) contient un motif, en particulier un motif ondulé s'étendant dans la direction longitudinale et/ou transversale.

8. Procédé selon l'une des revendications précédentes, **caractérisé en ce que** l'on applique au moins une bande tricotée (4, 5) au moins sur les zones fondues ou pourvues d'adhésifs par compression de la bande de mousse synthétique.

9. Procédé selon la revendication 8ᵣ **caractérisé en ce que** l'on utilise au moins une bande tricotée extensible (4, 5) et que l'on prévoit une extensibilité pour permettre un relâchement au moins pratiquement complet de la bande de mousse synthétique après application de la doublure.

10. Procédé selon l'une des revendications précédentes, **caractérisé en ce que** l'on effectue la compression de la bande de mousse synthétique (1a) avant la fusion et/ou l'application de la substance adhésive et/ou de la(des) bande(s) tricotée(s) (4, 5) de telle sorte que la bande de mousse synthétique (1a, 1b) à l'état de compression présente une épaisseur uniforme.

11. Procédé selon l'une des revendications précédentes, **caractérisé en ce que** la fusion de la bande de mousse synthétique (1a) respectivement l'application de la substance adhésive et/ou de la(des) bande(s) tricotée(s) (4, 5) se produit tandis que la bande de mousse synthétique (1a, 1b) présente une épaisseur essentiellement uniforme, qui correspond en particulier essentiellement à la première épaisseur (2a).

12. Procédé selon l'une des revendications précédentes, **caractérisé en ce que** la bande de mousse synthétique (1a) n'est laminée que d'un côté.

13. Procédé selon l'une des revendications précédentes, **caractérisé en ce que** la bande de mousse synthétique (1a) présente une première épaisseur (2a) dans la fouchette de 1 mm à 3 mm, en particulier de 2 mm et une seconde épaisseur (2b) de 3 à 6 mm, en particulier de 5 mm, et n'est ainsi structurée que d'un côté.

14. Procédé selon l'une quelconque des revendications 1 à 12, **caractérisé en ce que** la bande de mousse synthétique (1a) présente une seconde épaisseur (3a) de 5 mm ou plus.
